# EUROPEAN PATENT APPLICATION

(11) **EP 1 076 440 A1**
(43) Date of publication of application: **14.02.2001**
(21) Application number: 99810726.2
(22) Date of filing: 11.08.1999
(51) Int. Cl.: H04L 12/64, H04L 12/66, H04Q 11/04, H04M 7/00

(54) **Method for transferring data over a packet switching network and a gateway**

(71) Applicant: Inalp Networks AG, 3172 Niederwangen (CH)
(72) Inventor: Egli, Peter, 8051 Zürich (CH); Felder, Ramon, 3097 Liebefeld (CH); Bochsler, Daniel, 4500 Solothurn (CH)
(74) Representative: Patentanwälte Schaad, Balass, Menzl & Partner AG

(57) **Abstract**

The method and the gateway allow the transfer of data from a telecommunication network such as ISDN over an Internet Protocol (IP) based network. The gateway which is connected on the one hand to the telecommunication network and on the other hand to the Internet comprises an adaptation entity with a service access point to the telecommunication network for the exchange of control data and an access over a IP service access point to the IP Stack. Said adaptation entity is capable of mapping the control data presented at the service access point accompanied by at least one information element into the data field of an IP packet, selecting the IP-address of a destination gateway which connects the IP-network to a telecommunication network (ISDN) according to the called party number, adding the IP-address to the header information of said IP-packets and sending them over the IP-network to the destination gateway.

The method (ISoIP) and the gateway allow therefore the transparent transfer of the signalling data of the control path over an IP (Internet Protocol) based network.

## Description

The present invention relates to a method for transferring data over a packet switching network such as an IP (Internet Protocol) based network according to claim 1. It further relates to a gateway used for the implementation of said method (ISoIP / ISDN over IP) providing access on the one hand to a service access point of a telecommunication network such as ISDN, Frame Relay, ATM (Asynchronous Transfer Mode) and on the other hand to a service access point of the packet switching network according to claim 9.

### BACKGROUND OF THE INVENTION

Computer networks are designed in a highly structured way. To reduce their design complexity, most networks are organised as a series of layers, which offer certain services to higher layers (see [1], Andrew S. Tanenbaum, Computer Networks, Prentice-Hall Inc., New Jersey 1989, pages 9-12). Layer n on one machine of the network carries on a conversation with layer n on another machine of the network according to a layer n protocol. In the machines are therefore peer processes running that communicate on each layer. The protocol defines several layers (1 - n) on which data and control information is processed and forward vertically over an interface to the adjacent layer (n→n-1→n-2→...→1; 1→2, →...→n). The lowest layer, layer 1, is connected to a physical medium through which the actual (horizontal) data transfer between the machines takes place.

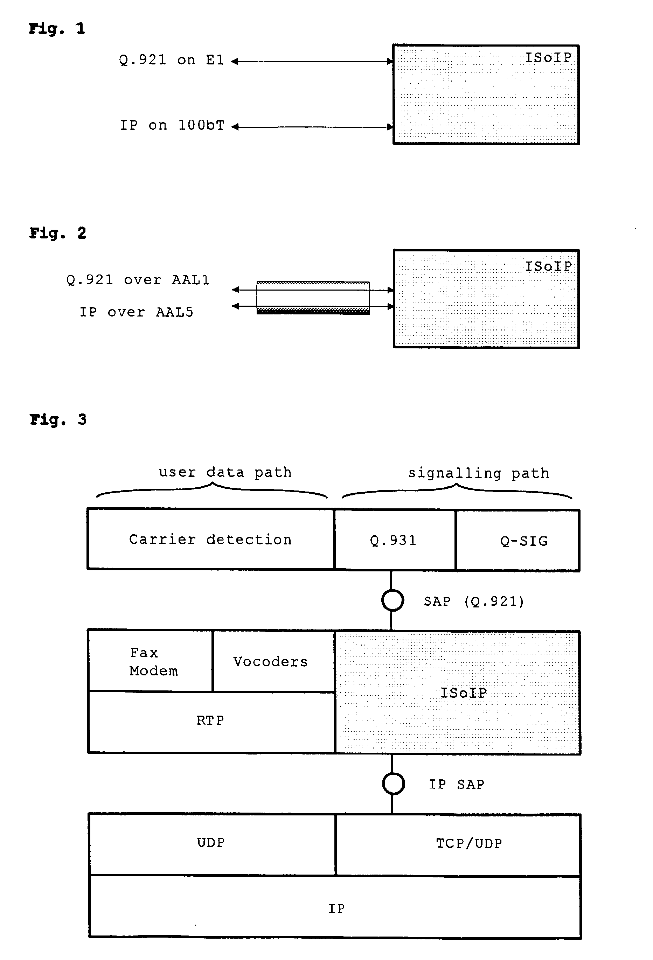

While passing the layers top down the information (normally in the transport layer, OSI-layer 4) gets split into packages which are labelled by a header carrying control information (see [1], Fig. 1-6). On each layer an individual header is added. It is interesting to note that the transport layer is a true source to destination layer or end-to-end layer. In the lower layers, the protocols are between each machine and it's immediate neighbours and not by the ultimate source and destination machines.

The set of layers and protocols is called the network architecture.

Modern network architectures are often based on the OSI (Open Systems Interconnection) Reference Model which has been defined by the ISO (International Standards Organisation).

While public telecommunication networks such as the ISDN (Integrated Services Digital Network), which is described in [1], chapter 2.6, follow the OSI Model, the Internet does not, since it's predecessor, the Arpanet, which has been created by the Advanced Research Projects Agency of the U.S. Department of Defense, predates the OSI Model.

The layers are arranged according to the OSI model as follows:

Layer 1 is the physical layer which is concerned with transmitting raw data over a communication channel from a source to a destination machine. Layer 2 is the data link layer which transforms the transmission facility of layer 1 and provides a line that appears free of transmission errors to the network layer (layer 3).

Layer 3, which is concerned with controlling the operation of the subnet formed by layers 1-3 (network access layers), determines how packets are routed from source to destination. Layer 3 of the Internet, the IP (Internet Protocol) is connectionless and was designed to handle the interconnection of a vast number of WAN and LAN networks. The OSI model however scarcely dealt with internetworking at all.

The ISDN on the contrary is a connection oriented network (often called a circuit switched network (SCN)). The essential feature in a circuit switched network is that a sequence of virtual circuits is set up from the source through one or more gateways to the destination. Each network node and gateway maintains tables telling which virtual circuits pass through it, where they are to be routed and what the new virtual circuit number is (see [1], pages 338-346). In a packet switching respective connectionless network however, packets sent need not to follow the same path. They can be sent over different routes from source to destination.

The concatenation of telecommunication and packet switching networks, which may bring significant advantages to a customer, requires measures as detailed below. The present invention is therefore not restricted by the protocols used in current networks and described herein (Q.921, Q.931, Internet Protocol IP, etc.).

Layer 4 of the Internet isolates the higher layers (layer 5 - session layer, layer 6 - presentation layer, layer 7-application layer) from the network layer and splits up data as required and ensures that all pieces are correctly received and reassembled. Layer 4 of the Internet, the Internet transport protocol TCP (Transmission Control Protocol)is a connection oriented protocol which differs from the OSI transport protocol in format and details.

Examples of the services offered on the higher levels are the well known FTP (File Transfer Protocol), HTTP (Hypertext Transfer Protocol), SMTP (Simple Mail Transfer Protocol) and TELNET (remote login).

Because of the differences in the protocols between telecommunication networks such as the ISDN and the Internet, the inter-networking of the Internet was limited for many years to the integration of LAN's and WAN's. In 1996 ITU released recommendation H.323 which is an umbrella recommendation for multimedia communications over LAN's that do not guarantee Quality of Service. H.323 allows to connect a packet switching network such as an Internet Protocol based network and switched network (ISDN) over a gateway. Based on TCP/IP (layer 4 and 3) and the lower layers 1 and 2 of the network the H.323 protocol stack uses the ITU-T H.225 signalling protocol to adapt to the Q.931 ISDN signalling information and the ITU-T H.245 control protocol to establish a control channel for the transfer of signalling information to endpoints or to a Gatekeeper. In the H.323 zone the Gatekeeper is required to perform address translation from LAN aliases for terminals and gateways to IP-addresses. In H.323 all signalling information is therefore terminated and translated in Gateway and Gatekeeper. Therefore in H.323 only features and functions are supported that are implemented by Gateway and Gatekeeper. Known functions are Call Setup and Call Release. ISDN terminals and exchanges (PBX) support however a number of additional features and functions (e.g.: call-back, call-relay, call-waiting, ...)which are not always supported within the H.323 zone.

The present invention is therefore based on the object of specifying a method and a gateway for transferring control data from a telecommunication network over a packet switching, preferably an IP (Internet Protocol) based network while maintaining the full functionality of the established connection.

### SUMMARY OF THE INVENTION

The above and other objects of the present invention are achieved by a method and a gateway which allow the transparent transfer of the signalling data of the control path over a packet switching network, e.g. a connectionless, IP based network.

The method and gateway provide a service access point to a layer 3 signalling protocol of a network architecture of a telecommunication network such as the ISDN. The service access point (see [1], page 22, SAP) can be standardised or adapted to a proprietary protocol.

The invention implements a protocol for the communication between peer entities or signalling gateways which are added to the network architecture, in order to negotiate connection gateways for the user data path to the underlying network layer (layer 3, IP) of the Internet and to map layer 3 signalling messages complete into layer 3 (IP) packets of the Internet. In order to enable said peer entities to handle the mapped signalling messages a header or a header and a trailer are added to the mapped data.

Since the control respective signalling data remains complete full potential of the signalling service primitives (see [1], page 24) is maintained.

On the user data path which may be established in the same or a different network the solution relies entirely on standardised or generally available technologies. The invention allows even the implementation of proprietary technologies in the data path.

### BRIEF DESCRIPTION OF THE DRAWINGS

Some of the objects and advantages of the present invention have been stated, others will appear when the following description is considered together with the accompanying drawings, in which:
Fig. 1 shows an inventive gateway providing, physically separated, a service access point to one or several layer 3 signalling entities of a telecommunication network and access to a service access point of the IP based network;
Fig. 2 shows the inventive gateway with logically separated access;
Fig. 3 shows the inventive protocol stack for the signalling and the user data path;
Fig. 4 shows the implementation of the inventive adaptation entities and protocols ISoIP in a network architecture allowing two ISDN devices (D1, D2) to communicate over Internet;
Fig. 5 shows an IP-packet containing mapped layer 3 signalling data transferred from the telecommunication network framed by a header and a trailer;
Fig. 6 shows an IP-packet containing user data transferred from the telecommunication network;
Fig. 7 shows the adaptation entity of Fig. 4 with a mapping table;
Fig. 8 shows the connection of the user side of an ISDN network over the Internet respective over IP based networks to the network side of an ISDN network;
Fig. 9 shows an information element generated by the adaptation entity;
Fig. 10 shows the ISoIP-setup protocol and
Fig. 11 shows the connection of an ISDN control channel over an IP network and the connection of a user channel over a different network.

### DETAILED DESCRIPTION OF THE PREFERRED EMBODIMENTS

Fig. 1 shows an inventive adaptation entity providing, physically separated, on the one hand a service access point to one or several layer 3 signalling entities of a telecommunication network and on the other hand access to an IP service access point (IP interface socket), which provides access to the transport layer (see Fig. 3, TCP/UDP) of the IP stack. The service access point may be specified according to ITU-T recommendation Q.921 ((ISDN user-network interface - data link layer specification).

Fig. 2 shows the inventive adaptation entity with logically separated access over ATM (Asynchronous Transfer Modus) Adaptation Layers (AAL1; AAL5) (see [2], Peter Bocker, ISDN-Digitale Netze für Sprach-, Text, Daten-, Video- und Multimediakommunikation, Springer Verlag, Berlin 1997, page 17, Fig. 2.3), which adapt the transport-oriented protocols to the application-oriented protocols of the corresponding layers.

Of course various other combinations of physical network connections and transmission technologies are possible.

Fig. 3 shows the inventive protocol stack for the inventive solution which can be split into the following parts, on the one hand the signalling respective control path and on the other hand the user data path, which consist of corresponding protocol entities which are the active elements in each layer.

On the user data path the solution relies entirely on standardised and generally available technologies and protocols including IP (Internet Protocol), UDP ([1], page 431, User Datagram Protocol), RTP (Real-time Transfer Protocol), various voice coders/decoders, fax modem, carrier detection, etc..

On the control path an adaptation entity (respective protocol) ISoIP, which has been mounted on top of a service access point or a standard IP socket interface, offers a Q.921 compliant data link service access point (DL-SAP) to the layer 3 protocol Q.931 (ITU-T recommendation Q.931: ISDN user-network interface layer 3 specification for basic call control / see also [2], page 16, Fig. 2.2). The adaptation entity ISoIP provides the service primitives of Q.921 to the layer 3 protocol and implements them over an IP-network.

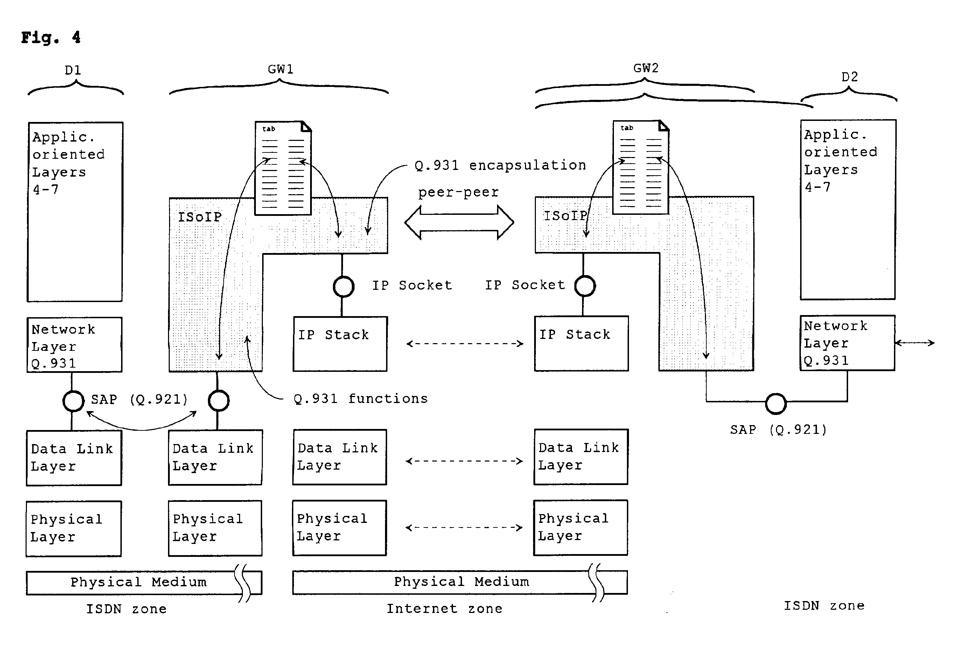

Fig. 4 shows the implementation of the inventive adaptation entities and protocols ISoIP of Fig. 3 in a network architecture allowing two ISDN devices (D1, D2) to communicate over the Internet. The adaptation entities and protocols ISoIP form a bridge for the control path from an IP service access point respective an IP socket of an IP stack to an ISDN service access point SAP (Q.921). It is interesting to note that the adaptation entities and protocols ISoIP embrace more than one layer of the OSI model.

In [2], page 14, Fig. 2.1 and page 118, Fig. 4.24 the layers of the protocol architecture of a ISDN network with ISDN terminals are shown. ISDN terminals communicate over the network, which comprises gateways that in general use layer 1, 2 and 3 of the OSI model. Layer 3 is always accessed through an ISDN service access point SAP (Q.921). The ISDN devices D1, D2 shown in Fig. 4 may also be ISDN terminals which communicate in the same way over a network which is formed by the ISDN and the Internet. The gateways GW1, GW2 therefore perform gateway-function between different networks (ISDN, IP-networks).

On the ISDN side, connection to the service access point SAP (Q.921) can be done (see connection of ISDN device Dl) over the layers 1 and 2 or directly over layer 3 (see connection of ISDN device D2).

As can be seen in Fig. 4 an adaptation entity ISoIP according to Fig. 3 implements a peer-to-peer protocol, which defines the communication between adaptation entities ISoIP of different gateways GW1, GW2.

The functions of the protocol for the adaptation entity ISoIP will be explained below.

An important aspect of the invention is, that the layer 3 signalling messages are mapped complete into IP-packets (IP-packets respective datagrams are described in [1], pages 359-361 and 429-431). According to the Transmission Control Protocol TCP each IP packet can hold payload up to MTU size (Maximum Transfer Unit).

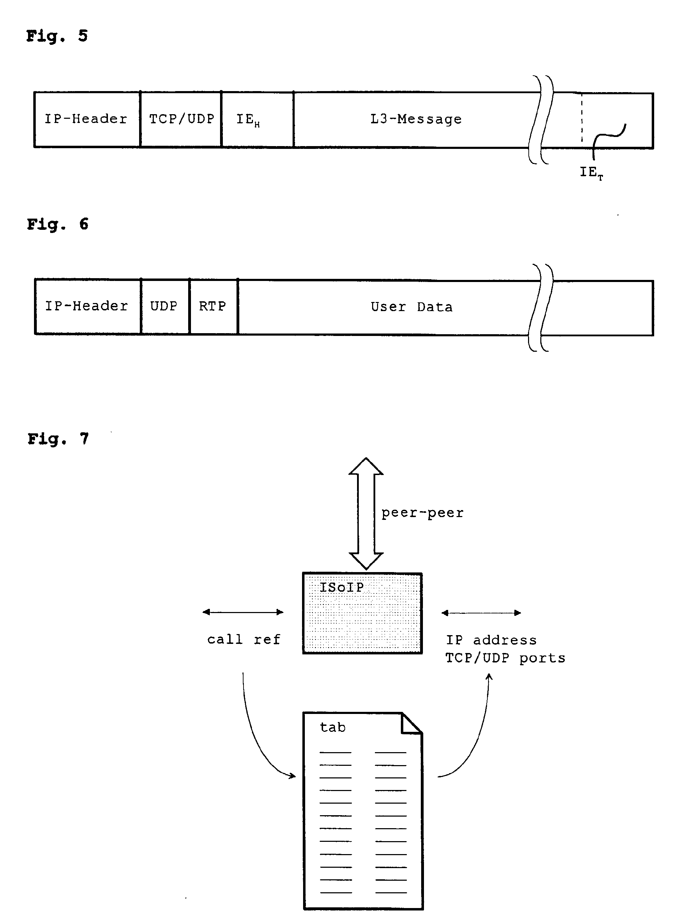

Fig. 5 shows an IP-packet containing mapped layer 3 signalling data transferred from the telecommunication network (ISDN). Depending on the layer 3 request the message can be mapped in IP-packets which contain headers of a specific transport protocol such as TCP (Transmission Control Protocol) or UDP (User Datagram Protocol). The mapped layer 3 signalling message is framed by information elements, a header IE_{H} and/or a trailer IE_{T} as shown in Fig. 5. Use of a header IE_{H} only is normally sufficient.

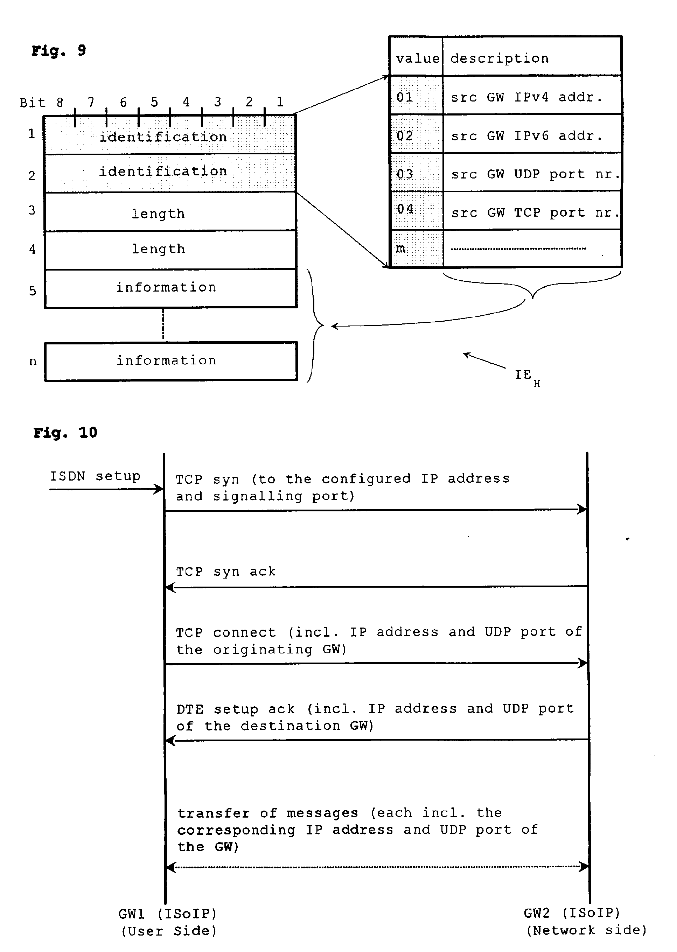

As indicated in Fig. 9 the information element respective the header IE_{H} comprises preferably n octets with an identification field (e.g. two octets), a length field (e.g. two octets) and an information field (n-4 octets). The identification field identifies the type of the information element IE_{H} respective the kind of information the information element IE_{H} contains (IP-addresses and/or transport protocol (TCP/UDP) port numbers of the source and/or destination gateways GW1; GW2). The length field specifies the length (number of octets (n)) of the information element IE_{H}. The information field contains the actual data (actual IP-addresses and/or transport protocol (TCP/UDP) port numbers of the source and/or destination gateways GW1; GW2).

With the help of the information elements IE_{H} the transferred layer 3 signalling messages can be unpacked in the adaptation entity ISoIP of the destination gateway GW1; GW2 and reintegrated in the ISDN D-channel data which is presented at the Q.921 compliant data link service access point (DL-SAP).

The ISoIP peer to peer protocol defines the communication between adaptation entities in different gateways. It's basic function is to negotiate the gateway addresses and port numbers for the B-channel data. It may be used to negotiate other parameters such as compression, service class, real-time requirements, etc.. The size of fields and the length and composition of the adaptation entity may be changed as required.

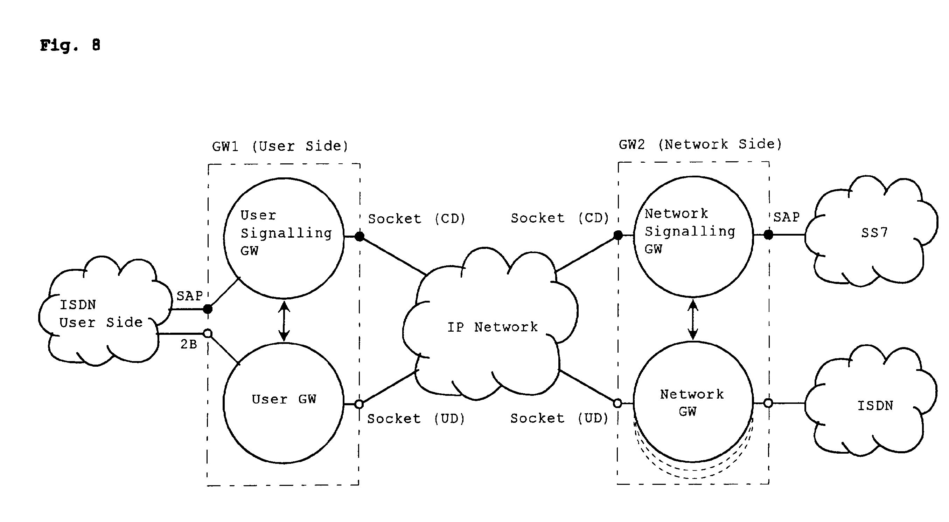

The setup procedure for a connection between two ISDN networks over an IP based network as shown in Fig. 8 according to the ISoIP peer to peer protocol is shown in Fig. 10. In general for every ISDN message received a ISoIP message is transferred over the IP based network. The ISDN signalling message is transparently transferred over the control path carrying a ISoIP header IE_{H} in front (framing with a header IE_{H} and a trailer IE_{T} is also possibly but requires more space) . According to the protocol, IP-addresses and TCP port numbers for the peer-to-peer communication between adaptation entities ISoIP need to be configured by means outside the scope of this invention. As shown in Fig. 4 and Fig. 7 each adaptation entity ISoIP maintains a mapping table (tab) in which corresponding layer 3 call references and the respective IP transmission channels (addresses and ports) are registered respective configured. The mapping table (tab) enables the adaptation entity ISoIP to establish the required transmission channel for the control path to a gateway GW1; GW2 which is assigned to the called party.

Fig. 8 shows the connection of the user side of an ISDN network over the Internet respective IP based networks to the network side of an ISDN network. On the user side the control data is transferred in a support channel (D-channel) which is assigned to the corresponding set of B-channels. On the network side control data are transferred in a centralised signalling channel according to signalling system no.7 (see [2], page 216) or reinserted into a D-channel. The adaptation entities ISoIP are comprised in signalling servers (user respective network signalling server) of the gateways GW1, GW2.

Since address- and port number information for the control paths is available in the signalling servers address and port negotiation is therefore done only for the setup of a user data channel (B-channel) for each (ISDN) call.

After a setup message (ISDN setup) is received from the telecommunication network the control channel is established between source and destination signalling gateways according to known procedures of the transport protocol (layer 4, TCP). First a SYN message is sent, telling the destination that a TCP connection is requested. The destination gateway opens a new socket, which will be dedicated to TCP packets from this particular source and returns a TCP SYN ACK message (see [1], page 430).

Upon receipt of the TCP SYN ACK message the source gateway sends a TCP connect message. This datagram may contain in the user field the first mapped ISDN control and signalling data (the ISDN setup message) combined with an ISoIP header IE_{H} which includes an IP address and a UDP port number of the originating gateway which are provided for the setup of the user channel. The destination gateway returns, preferably with the next ISDN message (e.g. connect), its IP address and UDP port for the setup of the user channel. Mapped ISDN Layer 3 messages as well as IP address and UDP port number for the user channel are enclosed in all following ISoIP messages. After the ISDN setup is complete, the user channel is established between the negotiated ports. The last ISDN Layer 3 message sent is the RLEASE COMPLETE message according to the Q.931 protocol after which user and ISoIP control channel are released.

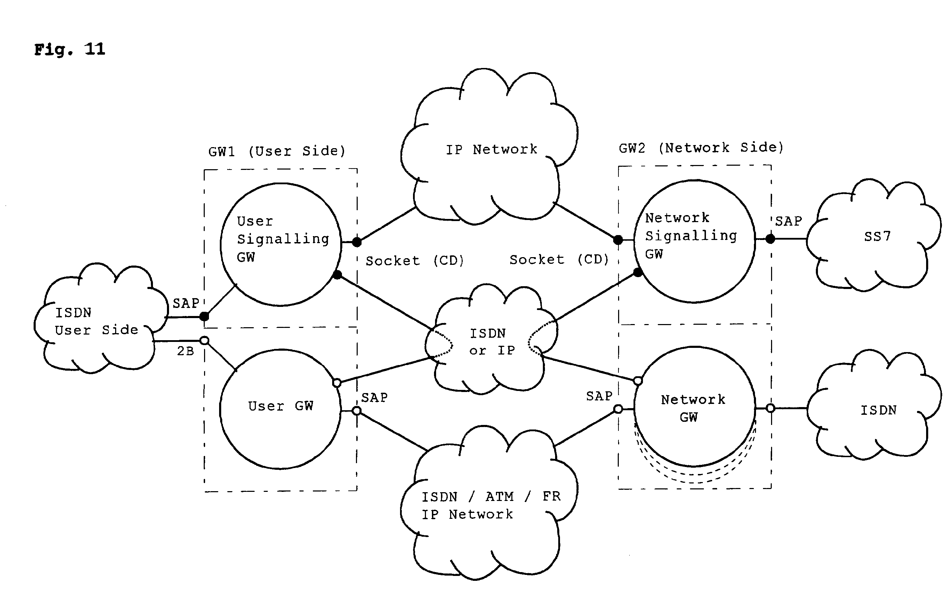

In case that the user data is not routed over the same network the user channel is not established. It may even be possible that only signalling data, e.g. according to signalling system no. 7, is transferred over the IP network (see Fig. 11). In Fig. 11 it is further shown that the signalling gateways are connected to the user gateways in order to transfer the negotiated transport address (network address and port number) which is required for the setup of the user-channel. This transfer may be done over a direct connection or over a channel routed through an IP network.

In the description of the inventive protocol architecture according to Fig. 3 it has been pointed out that the protocol stack of the user data path remains unchanged. As shown in Fig. 6 user data from the telecommunication network, i.e. ISDN B-channel data (see [1], pages 104, 105, fig. 2-30 and 2-31) are transmitted in IP-(UDP/RTP)-packets in a conventional way. Transfer of the packets shown in Fig. 5 and Fig. 6 is from left to right.

In order to fully understand the invention knowledge regarding Call Setup and Call Release in a telecommunication network is required. Call Setup and Call Release for ISDN are explained in [2], page 126-128 (see Fig. 4.27). It is important to note that transfer of user data respective B-channel data starts after completion of Call Setup and ends before Call Release. Control data and user data are transferred also over the Internet in the same order. It is clear that in some cases a connection cannot be established because the called party is not available. In this case a transfer of user data respective B-channel data will not occur. Instead call back functions or other services can be activated.

The inventive method and gateways GW1, GW2 allow therefore the extension of a telecommunication network such as ISDN over the Internet in such a manner that full functionality of all services of the telecommunication network is maintained. Data transfer between calling and called parties can be performed over long distances over the Internet at significantly reduced cost.

It is known that standards and network architectures may change whenever required. Therefore it is possible that the access points of the adaptation entity ISoIP to the Protocol Stacks of the Internet and the telecommunication network may require modifications as well. Modifications can be performed based on the present invention by a man skilled in the art whenever required or just suitable.

Fig. 11 shows the connection of an ISDN control channel over an IP network and the connection of a user channel over a different network. According to [1], pages 106-10 and [2], pages 215-223 ISDN uses out-of-band signalling between network nodes. The control channel is therefore using a path different from the one taken by the user channel. It may therefore be possible to route only the control and signalling channel over the connectionless (IP) network and to route the user data over a different connectionless or connection oriented network.

In case that the user data are routed over the connection oriented (ISDN) network it may be possible to establish or use a switched circuit over which one or more calls are routed. In the B-channels of an ISDN connection a customer may pack several user channels which are controlled (setup and release or even switching and conference functions, etc.) by the control data sent over the connectionless circuit.
[1] Andrew S. Tanenbaum, Computer Networks, Prentice-Hall Inc., New Jersey 1989
[2] Peter Bocker, ISDN-Digitale Netze für Sprach-, Text, Daten-, Video- und Multimediakommunikation, Springer Verlag, Berlin 1997

## Claims

1. A method for transferring data from a telecommunication network such as ISDN over a packet switching network such as an Internet Protocol (IP) based network in which datagrams such as IP-packets are exchanged comprising the steps of
- transferring control data originating from a calling party to a gateway (GW1) which connects the telecommunication network (ISDN) to the packet switching network,
- presenting the control data at a service access point (SAP) of the telecommunication network (ISDN) to an adaptation entity (ISoIP) which has access over a service access point to the protocol stack of the packet switching network and performs the following steps,
- mapping the control data, presented at the service access point (SAP), accompanied by at least one information element (IE_{H}; IE_{T}) into the data field of a datagram, and
- selecting the configured transport address such as the IP address and port number of an adaptation entity (ISoIP) in a destination gateway (GW2) which connects the packet switching network to a telecommunication network (ISDN) according to the called party number,
- adding the network-address to the header of said datagram and sending it over the packet switching network to the adaptation entity (ISoIP) in the destination gateway (GW2), which adaptation entity (ISoIP) in the destination gateway (GW2) extracts the control data from the data field of the datagram,
- and transferring the control data over the corresponding service access point (SAP) to the called party or a corresponding device of the telecommunication network.

2. Method according to claim 1, in which the exchanged signalling and control data are used to establish a user data channel over said packet switching network or over a different connectionless or connection oriented network.

3. Method according to claim 2, in which for the establishment of the user data channel
- within said packet switching network the network address and the port number are negotiated between the adaptation entities (ISoIP) of the corresponding gateways (GW1; GW2) or
- within a circuit switching network one or more calls which are routed via the established user data channel in a switched circuit, are controlled by the signalling and control data transferred in the control channel.

4. Method according to claim 2 or 3, in which, after a user channel between called and calling party has been established over a packet switching or a circuit switching network, the following steps are performed
- in the source user gateway (GW1), which may be combined with or separated from the signalling gateway,
- entering user data into the data field of a datagram, and
- adding the negotiated network address and port number to the header information of said datagram and sending it over the packet switching or circuit switching network to the destination gateway(GW2),
- in the destination user gateway (GW2), which may be combined with or separated from the signalling gateway,
- extracting the user data from the data field of the datagram and sending them to the calling respective called party.

5. Method according to one of the claims 1 to 4, in which, transport address of the adaptation entity (ISoIP) of the destination gateway (GW2) is selected in the source gateway (GW1) from a table, in which called party numbers and corresponding transport addresses of adaptation entities (ISoIP) in destination gateways (GW2) are registered.

6. Method according to one of the claims 1 to 5, in which the adaptation entity exchanges (ISoIP) control data over a service access point (SAP) as specified in ITU-T recommendation Q.921 and/or the network protocol of the packet switching network is the Internet protocol (IP) and datagrams are IP-packets.

7. Method according to one of the claims 1 to 6, in which a header (IE_{H}) and/or a trailer (IE_{T}) are added to the mapped control data.

8. Method according to one of the claims 2 to 7, in which the IP address and TCP port number of the user channel are contained in all ISoIP messages exchanged between the ISoIP entities of the source and destination gateways (GW1; GW2).

9. A gateway (GW1; GW2) for the transfer of data from a telecommunication network such as the ISDN over a packet switching network such as an Internet Protocol (IP) based network according to the method of claim 1 being connected on the one hand to the telecommunication network (ISDN) and on the other hand to the packet switching network thereby implementing entities according to the network protocol of the packet switching network and additional Transmission Layers characterised in that
- an adaptation entity (ISoIP) is provided with on the one hand a service access point to the telecommunication network (ISDN) for the exchange of control data and on the other hand an access over a service access point to the protocol-stack of the packet switching network, said adaptation entity (ISoIP) being capable to perform the following steps,
- mapping the control data, presented at the service access point (SAP), accompanied by at least one information element (IE_{H}; IE_{T}) into the data field of a datagram such as an IP packet, and
- selecting the network address and port number of an adaptation entity (ISoIP) of a destination gateway (GW2) which connects the packet switching network to a telecommunication network (ISDN) according to the called party number,
- adding the network address to the header information of said datagrams and sending them over the packet switching network to the adaptation entity (ISoIP) of the destination gateway (GW2),
- extracting the control data from the data field of the transferred datagrams, and
- transferring the control data over the service access point (SAP) to the called party.

10. A gateway according to claim 9 wherein the exchanged signalling and control data are used, within the same gateway or in a separated user gateway, to establish and control at least one user data channel over said packet switching network or a different packet switching or circuit switching network.

11. A gateway according to claim 10 with an adaptation entity (ISoIP), which, for the setup of the user data channel within said packet switching network, is capable to negotiate the network address and the port number with the adaptation entity (ISoIP) of the destination gateway (GW2).

12. A gateway according to claim 10 or 11 which, after the network address and the port number for the user data channel have been negotiated by the adaptation entities (ISoIP), is capable to perform the following steps
- entering user data into the data field of a datagram,
- adding the network address to the header information of said datagram and sending it over the packet switching network to the destination gateway (GW2; GW1) and
- extracting the user data from the data field of transferred datagrams and sending them to the calling respective called party.

13. A gateway according to claim 9, 10, 11 or 12, in which, network addresses and port numbers of the adaptation entity (ISoIP) in the destination gateway (GW2) are selected from a table, in which called party numbers and corresponding network addresses and port numbers are registered.

14. A gateway according to one of the claims 9 to 13, in which the service access point (SAP) is specified according to ITU-T recommendation Q.921 and/or the network protocol of the packet switching network is the Internet protocol (IP) and datagrams are IP-packets.
